# EUROPEAN PATENT SPECIFICATION

(11) **EP 4 149 749 B1**
(45) Date of publication and mention of the grant of the patent: **01.05.2024**
(21) Application number: 21831377.3
(22) Date of filing: 14.12.2021
(51) Int. Cl.: B31D 5/00, B31F 1/20, B29C 53/30, A47G 21/18

(54) **APPARATUS AND METHOD FOR MAKING FLEXIBLE SHAPED PORTIONS ON TUBULAR ELEMENTS**
VORRICHTUNG UND VERFAHREN ZUR HERSTELLUNG VON FLEXIBLEN FORMTEILEN AUF ROHRFÖRMIGEN TEILEN
APPAREIL ET PROCÉDÉ DE FABRICATION DE PARTIES FAÇONNÉES FLEXIBLES SUR DES ÉLÉMENTS TUBULAIRES

(30) Priority: 14.12.2020 IT 202000030734
(43) Date of publication of application: 22.03.2023
(73) Proprietor: I.M.A. Industria Macchine Automatiche S.p.A., 40064 Ozzano dell'Emilia (BO) (IT)
(72) Inventor: DRAGHETTI, Fiorenzo, 40064 Ozzano Dell'Emilia (IT); CERCIELLO, Joe, 40064 Ozzano Dell'Emilia (IT)
(74) Representative: Petraz, Gilberto Luigi
(86) International application number: PCT/IT2021/050410
(87) International publication number: WO 2022/130435

(56) References cited:
- ES-A1- 8 608 395
- JP-A- S55 128 436
- US-A- 3 493 998
- US-A- 3 641 884

## Description

### FIELD OF THE INVENTION

The present invention concerns an apparatus and a method for making flexible shaped portions on tubular elements, preferably made of paper, cardboard or other similar materials having adequate flexibility that allows them to be deformed.

In particular, the apparatus and the method according to the present invention are suitable to work tubular elements from which straws are obtained, for example to be used to drink a liquid or semi-liquid product. More specifically, the flexible shaped portion made on the tubular element, allows, during use, to bend the straw in two, to reduce its bulk before packaging, and then, also in a repeatable way, to allow the user to bend it as desired, without damaging it and maintaining its functionality.

### BACKGROUND OF THE INVENTION

Plastic or paper straws are known, typically used in the food sector, with the purpose of sipping drinks or beverages in general from containers, such as glasses, bottles, carton packs, for example in the shape of a parallelepiped, also known as "Tetra brik".

It is also known that some types of straws are of the bendable type, having a flexible shaped portion, which allows the straw itself to be bent in two, also in a repeatable way, without damaging it and maintaining its functionality. Typically, the flexible shaped portion is the "bellows" type, defined by a succession of annular ridges and grooves coaxial to the longitudinal axis of the straw, and formed for example by grooves, indentations, variations in thickness, suitable to allow the straws to be bent.

The bendable straws are often combined, individually, with hermetically sealed containers of beverages, such as fruit juices, or other, which are normally small in size, with a capacity in the range of 100-200 ml, and are each provided with a pierceable zone to facilitate the insertion of the straw.

Apparatuses and methods for making straws provided with a flexible shaped portion are described, for example, in the United States patent document US-A-2.985.077 or in the Spanish patent application ES-A1-8608395.

These known solutions provide mechanical deforming members which act on the straw kept in rotation to form said annular grooves in suitable positions, such that each groove is interposed between two consecutive ridges. ES-A1-8608395 relates to a corrugating machine for straws and discloses internal forming means and external forming means which form, in cooperation with each other, a corrugated portion defined by a succession of annular ridges and grooves, wherein the external forming means comprise a pair of rotating forming discs comprising forming sections which sections are engaging periodically with a tubular element during rotation.

In some known solutions, such as for example in the one described in US-A-2.985.077, the mechanical deforming members are located on a member that is rotatable about an axis of rotation parallel to that of the straw being worked, so that their action also causes the straw itself to rotate during the making of the grooves.

These known solutions have various disadvantages, in particular when they are used to make the flexible shaped portion of straws made of paper. In fact, while plastic materials - by virtue of their intrinsic properties - allow to make the grooves and ridges of the flexible shaped portion with relative ease, this is not true for paper straws. In fact, due to the intrinsic properties of the material, paper has a mechanical resistance to permanent deformation which is much higher than that of plastic materials, and follows an elastic-plastic behavior. In other words, paper is endowed with a significant elastic component that means that the material tends to take on its original shape again, when the action of the mechanical deforming members ceases.

Furthermore, another disadvantage of solutions known in the state of the art is that the mechanical deforming members act on the straw, and contact it to deform it, only for a very short period of time, for example equal to the time that the straw takes to perform a rotation, or some rotations, on itself.

It is obvious that in this limited period of time the mechanical deforming members are not able to perform a compression/deformation action on the paper such as to create grooves and ridges which then have a stable and long-lasting shape.

Consequently, one disadvantage of known solutions is that they do not allow paper straws to be deformed permanently, since the flexible shaped portion could immediately return after the deformation undergone, and thus lose, at least to a significant extent, the previously formed grooves and the ridges.

Another disadvantage of known solutions, always linked to the intrinsic properties of paper, is that they are not able to deform the straws in such a way as to obtain a bellows structure provided with clear and defined bends, in order to form the grooves and ridges. This means that these straws are not easy to bend in the bellows area and that they are also inconvenient to use.

Another disadvantage of some of the apparatuses and methods known in the state of the art is that they allow to make flexible shaped portions which do allow to bend a terminal part of the straw, but only with large radii of curvature. Consequently, these solutions prevent the straw from bending substantially on itself, that is, with a bending angle of up to 180°, unless a very long flexible shaped portion is provided and therefore not compatible with the practical and industrial needs of the field of application described above, for example for small-sized drinking straws, such as straws for small portable containers for beverages, such as, for example those of the "Tetra brik" type.

Another disadvantage of some known solutions is that, due to their structural complexity, they require long and laborious fine-tuning and maintenance operations.

Another disadvantage of some known solutions is that they are unable to achieve the high productivity values required in industrial sectors of consumer goods with a low economic value per unit, such as straws, which makes the use of such apparatuses and methods known in the state of the art uneconomical.

One purpose of the present invention is to provide an apparatus, and to perfect a method, for making at least one flexible shaped portion on tubular elements, preferably made of paper or similar materials, from which straws are preferably obtained.

Another purpose of the present invention is to provide an apparatus and to perfect a method able to obtain high or very high productivity, understood as the number of shaped tubular elements made in the unit of time, even higher than a thousand per minute.

Another purpose of the present invention is to provide an apparatus, and to perfect a method, which are reliable and effective, able to make shaped portions formed by a succession of annular ridges and grooves coaxial to a longitudinal axis of the tubular elements, substantially defined by clear and permanent bends, and having a stable shape that is maintained indefinitely over time.

Another purpose of the present invention is to provide an apparatus, and to perfect a method, which are very flexible, and which allow to work tubular elements having an overall longitudinal length comprised within a very wide range of values, as well as to carry out a quick and easy format change, which does not require long machine downtimes and laborious interventions by specialized operators.

Another purpose of the present invention is to provide an apparatus, and to perfect a method, which are suitable to be integrated in a more complex machine, preferably automated, able to carry out all the necessary workings on the tubular elements, for example to transform them into finished straws, as well as to pack each of the latter in a corresponding package suitable to preserve it hygienically until it is used.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, according to the invention an apparatus is made available for making at least one flexible shaped portion on tubular elements, which is defined by a succession of ridges and grooves, preferably in order to produce straws, in particular made of paper or similar materials. In particular, the annular ridges and grooves are substantially coaxial to a longitudinal axis of the tubular elements.

Here and throughout this description, the terms "ridges" and "grooves" refer, respectively, to reliefs and depressions defined for example as grooves, or indentations, or folds, or variations in thickness that allow to significantly bend the flexible shaped portion in order to then be able to fold one terminal portion of the tubular elements onto the other portion, usually longer, of the tubular elements themselves.

In the present description, the apparatus and the method according to the present invention will be described with reference to the working of a tubular element, to which we will refer hereafter in an exemplary and non-limiting manner. It is understood that the teachings of the present invention disclose an apparatus and method which are suitable to also work other types of tubular products, for the working of which the person of skill in the art is perfectly capable of adapting the teachings of the present invention to the specific case of application.

According to some embodiments provided here, the apparatus comprises external forming means and internal forming means which in cooperation with each other locally deform each tubular element by acting respectively on an external surface and an internal surface thereof.

According to one aspect, the external forming means comprise a plurality of forming units configured to be moved alternately, in a selective manner, between a configuration of engagement with the tubular elements, in which the external forming means and the internal forming means locally deform the tubular elements to make the flexible shaped portion, and a configuration of disengagement, in which at least the external forming means do not contact the tubular elements. Furthermore, it is provided that each forming unit comprises at least one forming member rotatable about a respective axis of rotation of its own.

According to some embodiments, the plurality of forming units is attached to a rotating member, which is rotatable about a main longitudinal axis of the apparatus, so that the axes of rotation about which the rotatable forming members rotate remain parallel to the main longitudinal axis.

In accordance with some embodiments provided here, each forming unit comprises a pair of forming members configured as rollers, and the axes of rotation of two forming members belonging to the same forming unit are reciprocally parallel and distanced by a fixed distance, which is such as to allow the interposition of a tubular element between the pair of forming members.

Furthermore, according to these embodiments, each forming unit is mobile in a bidirectional manner, according to rectilinear and alternating displacements, parallel to a radial direction with respect to the longitudinal axis, between a radially retracted position in which the forming unit is in the configuration of disengagement and a radially extended position in which the forming unit is in the configuration of engagement.

In accordance with other embodiments provided here, each forming unit comprises a pair of forming members, in particular configured as rollers, each disposed on a respective oscillating lever in such a way that the forming members of the pair can alternately assume a reciprocally distanced position, in which the axes of rotation are distanced by a first distance and the forming unit is in the configuration of disengagement, and a reciprocally approached position, in which the axes of rotation are distanced by a second distance, smaller than the first distance, and the forming unit is in the configuration of engagement.

According to preferred embodiments, each forming unit comprises a cam-follower which engages with a cam profile shaped in such a way as to allow the cam-follower to selectively command the forming units to alternately assume the configuration of engagement and the configuration of disengagement.

In accordance with some embodiments provided here, the internal forming means are configured as a plurality of forming spindles configured to be first selectively inserted inside the tubular elements during the forming of the flexible shaped portion, and then selectively extracted from the tubular elements once the forming is completed.

In accordance with some embodiments of the present invention, each forming spindle comprises internal forming members configured to deform an internal surface of each tubular element, in order to produce the flexible shaped portion as above in cooperation with the external forming means.

With the expression "internal forming members", here and throughout the present description we intend to indicate such members on the basis of their function, which is to shape or deform the internal surface of the straw, acting from the inside of the latter. Similarly, with the expression "external forming members", here and throughout the present description we intend to indicate such members on the basis of their function, which is to shape or deform the external surface of the straw, acting from the outside of the latter.

According to some embodiments of the present invention, the internal forming members are shaped as a corrugated portion, having a profile formed by a succession of annular ridges and grooves.

According to some embodiments of the present invention, the external forming means comprise at least a plurality of corrugations which define a succession of ridges and grooves, the shape of which is correlated to, preferably mating with, more preferably in an offset manner, the shape of the profile of the internal forming members of the forming spindles, so that the annular ridges of the internal forming members are aligned with the grooves of the plurality of corrugations of the external forming means when the forming spindles are inserted inside the tubular elements.

Preferably, the internal forming members and the plurality of corrugations of the external forming means have an extension, measured in a direction parallel to the longitudinal axis, equal to at least the nominal extension of the flexible shaped portion of the tubular elements.

According to some embodiments, the plurality of corrugations comprises a first plurality of corrugations made on a peripheral surface of each forming member, and a second plurality of corrugations present on a fixed member. These pluralities of corrugations are opposite each other with a passage zone in the middle to selectively receive the tubular elements with the internal forming means inside.

According to some embodiments, the forming units are disposed angularly, equally distanced from each other in the proximity of a peripheral edge of the rotating member, so that the first plurality of corrugations is disposed in the proximity of the passage zone so that the tubular elements, passing through the passage zone, can interact both with the first and also the second plurality of corrugations.

According to some embodiments, the fixed member has a convex shaped surface, facing toward the plurality of forming units, and the fixed member is conformed in such a way that the second plurality of corrugations extends for an arc of circumference having a determinate angle at the center.

According to some embodiments, the apparatus also comprises a programmable control and command unit configured to command the movement of the internal forming means and of the external forming means in a reciprocally coordinated manner. If the apparatus is integrated into a machine for working tubular elements, it is clear that the programmable control and command unit as above can be the command unit of the entire machine. Alternatively, if each work unit comprised in the machine is commanded by a respective control and command unit, the programmable control and command unit as above is able to interface with the other control and command units that govern the functioning of the work units disposed immediately upstream and downstream of the apparatus according to the present invention, in order to ensure the correct functioning of the machine.

In some embodiments of the present invention, each forming spindle is constrained to a command member sliding parallel to the longitudinal axis with reciprocated motion between a first operating position, in which the forming spindle is completely inserted inside a respective tubular element, and a second operating position, in which the forming spindle is completely extracted from the respective tubular element, and vice versa. The reciprocated motion of the command member is obtained, in particular, by means of a cam profile with which there is engaged a corresponding cam-follower associated with the command member.

According to another aspect of the present invention, a method is made available to make at least one flexible shaped portion on tubular elements, which is defined by a succession of annular ridges and grooves, and thus obtain a respective straw, preferably made of paper, from each tubular element.

The method comprises a forming step, during which it is provided to selectively insert, inside each tubular element, internal forming means, which are configured to locally deform each of the tubular elements in order to make the flexible shaped portion, acting on an internal surface thereof, in association with external forming means, comprising a plurality of forming units, which act on a corresponding external surface of the tubular elements by means of at least one forming member comprised in each forming unit and rotating about an axis of rotation of its own.

According to one aspect of the method, it is provided to alternately move the forming units between a configuration of engagement with the tubular elements, in which the forming step occurs and each tubular element is engaged by a respective forming unit, and a configuration of disengagement, in which the external forming means are not in contact with the tubular elements.

In accordance with some embodiments of the method provided here, in the forming step the internal forming means are maintained selectively inserted inside the tubular elements during the forming of the flexible shaped portion, so as to then be selectively extracted from the tubular elements once the forming is completed.

In accordance with some embodiments of the method provided here, the method provides to carry out the forming step while the tubular elements pass through a passage zone, operatively interposed between a first plurality of corrugations present on each forming member and a second plurality of corrugations present on a fixed member, which is also comprised in the external forming means.

In the method according to the present invention, the step of forming the tubular elements allows to form all the ridges and grooves of the flexible shaped portion at the same time, while the elements pass through the passage zone as above.

One advantage of the apparatus and of the method according to the present invention is to obtain, in an efficient manner, a permanent deformation of each tubular element, suitable to produce at least one flexible shaped portion, each provided with a succession of annular ridges and grooves having a stable shape over time. This is possible thanks to the peculiar conformation and disposition of the external forming members, which cooperate with the internal forming members that act on each tubular element while it passes through a passage zone, that is, for a path segment, and consequently a time of intervention, that is long enough to produce permanent deformations with a stable and long-lasting shape.

Another advantage of the apparatus and of the method according to the present invention is that it allows to reach very high productivity, even higher than a thousand deformed straws per minute.

The Applicant has devised, tested and embodied the present invention to overcome the shortcomings of the state of the art and to obtain these and other purposes and advantages.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic front view of a portion of a machine for the automated production of straws comprising an apparatus for making a flexible shaped portion on tubular elements, in accordance with the teachings of the present invention;
- fig. 2 is a front and schematic view, enlarged and more detailed, of the apparatus shown in the portion of machine visible in fig. 1;
- figs. 3 and 4 are lateral, enlarged, partial and schematic views which show some components comprised in the apparatus of fig. 2 in two different operating configurations;
- fig. 3a is an enlarged detail of fig. 3;
- fig. 5 is a schematic front view of another embodiment of an apparatus for making a flexible shaped portion on tubular elements, in accordance with the teachings of the present invention;
- figs. 5a and 5b are front, enlarged and schematic views which show some components comprised in the apparatus of fig. 5 shown in two different operating configurations;
- fig. 5c shows an enlarged detail of fig. 5b;
- fig. 6 is a schematic, longitudinal section view of a tubular element made of paper, deformed using the apparatus of fig. 2 or, alternatively, the apparatus of fig. 5.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

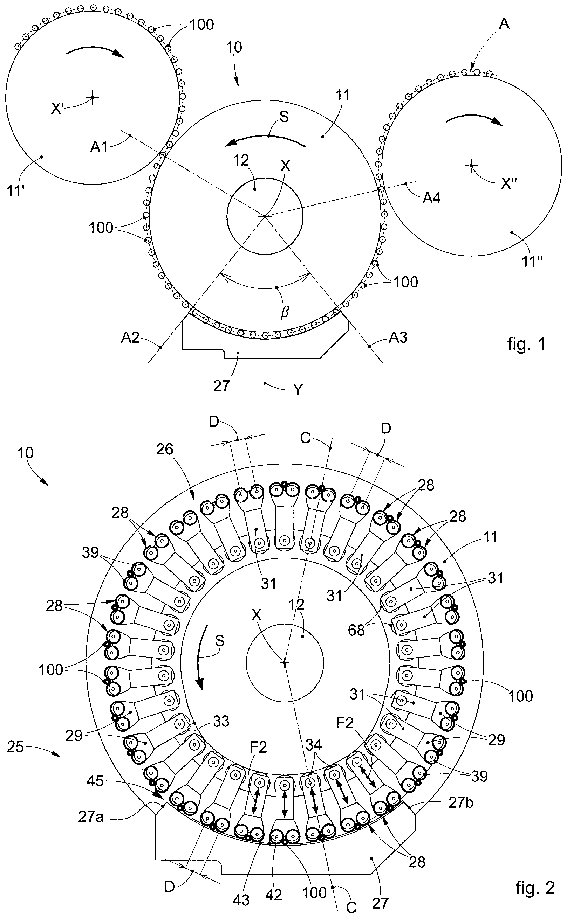

With reference to fig. 1, this shows a portion of a machine for the automated production of straws starting from already produced tubular elements and comprising an apparatus 10 for making at least one flexible shaped portion on such tubular elements. The tubular elements, indicated in the drawings with reference number 100, are preferably made of paper material, and each have a determinate initial length L, preferably comprised between about 50 mm and about 400 mm.

By way of a non-limiting example, the machine for the automated production of straws can be configured as the one described in Italian patent applications n. 102020000013819 or 102020000013822 of the same Applicant, or also as any other known type whatsoever or one that will be developed in the future.

The machine comprises a plurality of stations for working the tubular elements 100, disposed in succession along the path of advance A of the tubular elements, a portion of which is shown with a dashed line in fig. 1.

In the example embodiment shown in fig. 1, the machine comprises a plurality of rotating members 11, 11', 11", each rotatable about a respective axis of rotation so that such axes, indicated in fig. 1 respectively with X, X' and X", are all parallel to each other. The rotating members 11, 11' and 11" are disposed in sequence one after the other in order to guide the tubular elements 100 through the different work stations disposed along the path of advance A to obtain the straw 101.

By way of example, a first rotating member 11' is configured as a distancing unit to distance the tubular elements 100 from each other and take them to a determinate constant pitch from each other, leading them from a feeding unit (not shown) in which the tubular elements 100 are disposed in bulk, toward the subsequent rotating members 11 and 11 ", where the workings will be performed.

Continuing with the example, downstream of the first rotating member 11' there is disposed the apparatus 10 according to the present invention, configured to make the flexible shaped portion on the tubular elements 100, in the manner that will be explained in detail below, and comprising the rotating member 11. After the deformation operation, the tubular elements 100 reach other work stations, disposed on one or more other rotating members, for example configured to cut an end portion of the tubular elements 100 and/or to fold the two opposite ends of the tubular elements 100 onto each other by 180° in order to form a straw 101 folded in correspondence with the flexible shaped portion previously made by means of the apparatus 10 according to the present invention. Fig. 1 shows, upstream and downstream of the apparatus 10 with reference to the forward flow of the tubular elements, only one other rotating member, indicated respectively by the numerical references 11' and 11", but it is evident that the machine for making straws 101 can comprise many other rotating members, both upstream as well as downstream of the apparatus itself.

According to one variant, not shown, but in any case included within the field and scope of the present invention, there can be provided one or more members for moving the tubular elements 100 that are not configured as the rotating members 11, 11', 11". By way of example, one or more of the members 11, 11', 11" could be replaced, in a completely equivalent way, by other conveyors, for example of the belt type, in a closed-loop, in which a path of advance of the tubular elements 100 is provided, comprising both linear and also curvilinear or circular segments.

To better understand the inventive concept of the present invention, before describing the apparatus 10 and the corresponding method in detail, an example is now described of how the flexible shaped portion can be made on a tubular element 100 using the apparatus 10, it being understood that the present invention is not limited to this example, but that the invention can be used to work many other types of tubular elements, of a type that is already known or that will be developed in the future.

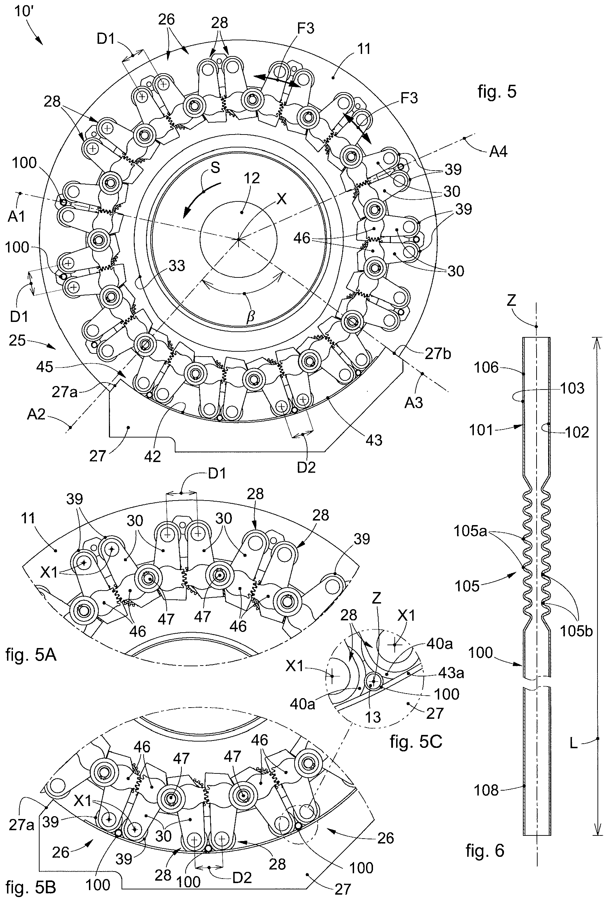

By way of example, as better shown in fig. 6, the tubular element 100 can consist of a single hollow tubular body with an oblong shape and having a longitudinal axis Z, from which a straw 101 is preferably obtained.

Each tubular element 100 comprises an internal surface 102 and an external surface 103, which together define a cylindrical wall having a determinate thickness, for example comprised between about 0.2 mm and about 0.5 mm. Purely as an indication, the tubular element 100 can have an external diameter comprised between about 2 mm and about 20 mm, preferably between about 2.5 mm and about 5 mm.

Each tubular element 100, at the end of the method carried out with the apparatus 10, will have a flexible shaped portion 105, in the shape of a bellows, and two terminal portions 106, 108 between which the flexible shaped portion 105 is interposed. The flexible shaped portion 105 will allow each straw 101 to be easily bent to about 180°, that is, until its two terminal portions 106 and 108 are moved so as to become parallel to each other, with a very small radius of curvature.

The flexible shaped portion 105 is defined by a succession of ridges 105a and grooves 105b, annular and coaxial with respect to the longitudinal axis Z of the straw 101, also referred to as first longitudinal axis Z in the present description.

To obtain the straw 101, the flexible shaped portion 105 can be advantageously made by means of the apparatus 10 according to the present invention, by means of the method that will be explained in greater detail below.

With reference to fig. 2, a first embodiment of an apparatus 10 in accordance with the teachings of the present invention is now described in greater detail. The apparatus 10 comprises a rotating member 11, having a longitudinal axis X of its own, also called second longitudinal axis, for example horizontal. The rotating member 11 is mounted rotatable about this longitudinal axis X, which constitutes the main axis of the apparatus 10.

The rotating member 11 is made to rotate, for example, by a first electric motor of a known type, or which will be developed in the future, which for simplicity is not shown in the drawings, for example by means of a toothed gear, not shown, which moves a central shaft 12 rotating coaxially with respect to the longitudinal axis X. For example, the rotating member 11 is made to rotate in a determinate sense of rotation S (figs. 1 and 2), which is counterclockwise if viewed from the front part of the apparatus 10.

The apparatus 10 can be provided with a plurality of gripping members, not shown in the drawings, that is, with a certain number of individual gripping members that are each angularly distanced by a determinate angular pitch from the adjacent one. In the example provided here, there are thirty gripping members, so the angular pitch is 12°.

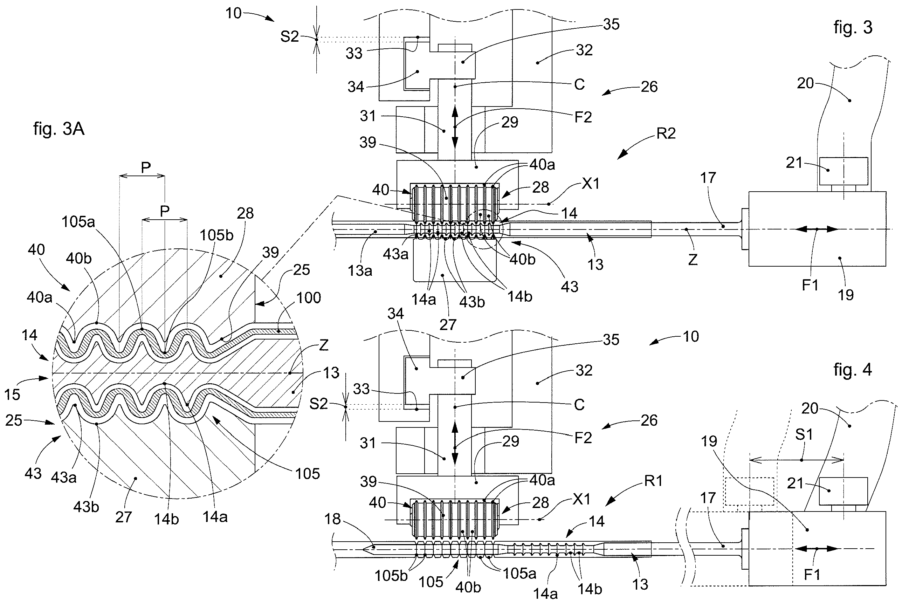

Each gripping member is configured to selectively grip or release a tubular element 100, so as to hold it in such a way that it is oriented with its longitudinal axis Z (fig. 2) parallel to the longitudinal axis X (figs. 3, 3A and 4), while it is being worked in the apparatus 10, for example by a defined angle of engagement α (fig. 1) corresponding to an analogous angle of rotation of the rotating member 11.

It should be noted that the gripping members can be of any known type whatsoever, or of a type that will be developed in the future, and can be configured, for example, as grippers or jaws, actuated by means of suitable command means capable of selectively and automatically taking them to alternately assume a closed, or gripping, condition and an open, or release, condition in which they respectively grip and hold in position, or release, a tubular element 100.

The apparatus 10 comprises a plurality of forming spindles 13 suitably shaped and configured to be selectively and temporarily inserted inside the tubular elements 100, as will be described in detail below.

All the forming spindles 13 are parallel to the longitudinal axis X and are angularly distanced from the adjacent one by the angular pitch as above. In this way, the disposition in space of the forming spindles 13 is angularly coordinated with the disposition of the gripping members, so that each tubular element 100 is temporarily and selectively held from the outside by a respective gripping member, and a corresponding forming spindle 13 is selectively and temporarily inserted inside it.

With particular reference to figs. 3, 3A and 4, the structure of each forming spindle 13 is described in greater detail, the forming spindle 13 comprising a cylindrical rod 13a, preferably metallic, having an external diameter substantially equal to, or slightly smaller than, the internal diameter of the tubular elements 100.

On the cylindrical rod 13a there is a corrugated portion 14, which is shaped in such a way as to define a succession of annular ridges 14a and grooves 14b, adjacent to each other with a linear pitch P (fig.3a) comprised between a few tenths of a millimeter and a few millimeters, and coaxial to the longitudinal axis Z of the forming spindle 13.

In one embodiment, provided here by way of example, the corrugated portion 14 comprises a succession of nine ridges 14a and ten grooves 14b, disposed in sequence one after the other according to a disposition whereby one ridge 14a and one groove 14b alternate in succession one after the other.

The different forming spindles 13, which in the example provided here are thirty, together with their corrugated portions 14, define internal forming means 15 of the tubular elements 100 which are configured to interact with the internal surface 102 of the latter during the method to make the flexible shaped portion 105 on such elements.

The forming spindle 13 is constrained to a command member 19, configured to support and move the forming spindle 13. Each forming spindle 13 is attached to the command member 19 in correspondence with a proximal end 17 thereof, which is opposite a distal end 18 (fig. 4) of the forming spindle 13 and is configured to enter cantilevered into a corresponding tubular element 100 held in a position coaxial to the forming spindle 13 by a corresponding gripping member.

The command member 19 is sliding parallel to the longitudinal axis X. In particular, each command member 19, and with it the forming spindle 13 connected thereto, can slide with reciprocated motion parallel to the longitudinal axis X between a first operating position, in which the forming spindle 13 is completely inserted inside a respective tubular element 100 (fig. 3), and a second operating position, in which the forming spindle 13 is completely extracted from the respective tubular element 100, and vice versa. This movement is schematized in figs. 3 and 4 by the bidirectional arrow F1.

The reciprocated motion of each command member 19 is obtained thanks to a cam profile 20, with which a corresponding cam-follower 21 associated with the corresponding command member 19 cooperates, so that each rotation of the rotating member 11 also determines a corresponding rectilinear and alternating displacement of each command member between its two operating positions. In the version provided here by way of a non-limiting example, the cam profile 20 is made on a lateral surface of a drum, which is fixed and configured as a cylindrical member coaxial to the longitudinal axis X, and with respect to which the rotating member 11 is rotatable, while the cam-follower 21 is configured as a wheel rotatable about an axis of rotation of its own. The linear travel of the command member 19 is indicated by reference S1 in fig. 4, where it is also possible to see the comparison, purely indicative, between the position of the cam-follower 21 relative to the cam profile 20 when the forming spindle 13 is retracting (solid line), and the position of the cam-follower 21 inside the cam profile 20 when the forming spindle 13 is completely inserted inside the tubular element 100 (dashed line).

The apparatus 10 also comprises external forming means 25 (figs. 2, 3 and 3A), configured to cooperate with the internal forming means 15 in order to make the flexible shaped portions 105 (fig. 7) on the tubular element 100, as will be described in detail below.

The external forming means 25 substantially comprise a plurality of forming units 26, rotating about the longitudinal axis X, which will be described in greater detail below, and a fixed element 27, which acts as a contrast member and is configured to cooperate with the latter and with the forming spindles 13 in order to make the flexible shaped portions 105 (fig. 7) on the tubular elements 100.

As can be seen in fig. 2, in the example provided here thirty forming units 26 are provided, angularly equally distanced by the angular pitch as above.

The position of the forming units 26 with respect to the longitudinal axis X is such as to allow the interaction with the fixed element 27.

With particular reference to figs. 2-4, a first embodiment of the forming units 26 is described below, given here by way of a non-limiting example.

Each forming unit 26 comprises a pair of rollers 28, parallel and adjacent to each other, and each rotatable about a respective axis of rotation X1 in a controlled or idle manner. It should be noted that the forming units 26 are disposed in the apparatus 10 in such a way that the axis of rotation X1 of the rollers 28 is oriented horizontal, so as to be substantially parallel to the longitudinal axis Z of the tubular elements 100 as well as to the longitudinal axis X.

The axes of rotation X1 of two rollers 28 belonging to the same forming unit 26 are reciprocally parallel and distanced by a distance D (fig. 2) which is such as to allow the interposition of a tubular element 100 between the two rollers 28 of the same forming unit 26.

The forming unit 26 comprises a support block 29 of the rollers 28, to support the latter and allow their rotation about the respective axes of rotation X1.

Each forming unit 26 comprises a connection rod 31 to which the support block 29 is attached. The connection rod 31 develops along an axis of longitudinal development C of its own, which is oriented in such a way as to be perpendicular to the longitudinal axis X and to the axes of rotation X1, that is, disposed in such a way as to always be parallel to radial directrices exiting from the longitudinal axis X.

The forming units 26 are attached to the rotating member 11. Consequently, the rotation of the rotating member 11 about the longitudinal axis X in the sense of rotation S (figs. 1 and 3) determines the rotation of the forming units 26. In particular, the forming units 26 are connected to the central shaft 12 by means of a connection hub 32, to which the connection rod 31 is attached.

The forming units 26 are mobile in a bidirectional manner, according to rectilinear and alternating displacements, parallel to the direction defined by their longitudinal axis of development C, between a radially retracted position R1 (fig. 4) and a radially extended position R2 (fig. 3), as schematized by the arrow F2 in figs. 3 and 4.

As can be seen in figs. 3 and 4, this movement of the forming units 26 is achieved thanks to a cam profile 33, made in the fixed drum as above, in which a corresponding cam-follower 34 associated with each forming unit 26 engages, so that each rotation of the rotating member 11 also determines a corresponding rectilinear and alternating displacement of each forming unit 26 between its different operating positions, as will be explained in greater detail below. The cam profile 33 is shaped in such a way as to allow the cam-follower 34 to follow a travel S2 that determines the displacement F2 between the two operating positions as above.

In the example embodiment shown in figs. 3-4, the cam-follower 34 is configured as a cylindrical member which constitutes the head of a transverse spindle 35 which passes through the connection rod 31 and is attached to the latter by means of a mechanical connection with interference.

The length of the rollers 28 (figs. 3-4) is substantially equal to the length of each flexible shaped portion 105 (fig. 2) to be made on the tubular element 100, measured parallel to the longitudinal axis Z of the latter.

Furthermore, each roller 28 has a peripheral surface 39 (figs. 3, 3A and 4) which is shaped in such a way as to have a plurality of corrugations 40 and which comprises ridges 40a and grooves 40b in succession (figs. 3 and 3a), which have the same linear pitch P (fig. 3a) as the ridges 14a and grooves 14b of the corrugated portion 14 of each forming spindle 13. In the example provided here, the peripheral surface 39 has ten ridges 40a and nine grooves 40b.

The fixed element 27 comprises a surface 42 that has the shape of a cylindrical sector facing toward the rotating member 11 and coaxial to the longitudinal axis X. The surface 42 has an angular extension of a defined angle β (fig. 1), for example comprised between about 45° and about 120°.

Furthermore, as can be seen in figs. 3 and 3a, the surface 42 is shaped in such a way as to have a plurality of corrugations 43 comprising ridges 43a and grooves 43b in succession, which have the same linear pitch P (fig.3a) as the ridges 40a and grooves 40b of the rollers 28 and are exactly aligned with them. Therefore, in the example provided here, the surface 42 (fig. 3) has ten ridges 43a and nine grooves 43b.

Furthermore, the fixed element 27 is positioned at a distance from the longitudinal axis X (fig. 2), and therefore from the rotating member 11, measured in the radial direction, along the median axis Y, such as to define, between the corrugations 40 of the rollers 28 and the corrugations 43 of the fixed element 27, a passage zone 45, or hollow space, for the tubular elements 100.

The passage zone 45 allows the tubular elements 100 being worked, which are made to rotate about the longitudinal axis X by the rotating member 11, to engage both with the corrugations 40 of the rollers 28 and also with the corrugations 43 of the fixed element 27 while the forming spindles 13 are inserted in the same tubular elements 100. It should be noted that the disposition of the forming units 26 in the apparatus 10 and their geometry are such that the rollers 28 completely interfere with the tubular elements 100, taken into rotation by the rotating member 11, while the tubular elements 100 pass through the passage zone 45.

In accordance with some variants, not shown here but easily understandable for a person of skill in the art and in any case included within the field and scope of the present invention, it is evident that the external forming members 25 can comprise only the fixed element 27, or only the forming units 26.

With reference to figs. 5, 5a and 5b, a second embodiment of an apparatus 10' for making a flexible shaped portion 105 on the tubular elements 100 is described.

We wish to clarify that in the example drawings of this embodiment, and in its detailed description below, the components similar to those described previously with reference to the first embodiment of figs. 2-4 will be indicated with the same reference numbers and their detailed description will not be repeated for reasons of brevity.

In particular, the second embodiment of the apparatus 10' provides a different conformation of the forming units 26.

In the example of the second embodiment provided here, each forming unit 26 comprises a pair of forming members 28. In particular, each forming member 28 is configured as a roller described above with particular reference to figs. 3 and 4.

Each forming member 28 is therefore rotatable about an axis of rotation X1 of its own, in an idle or commanded manner, and is provided with a peripheral surface 39 which is shaped in such a way as to have the plurality of corrugations 40 formed by the succession of ridges 40a and 40b groves.

Each forming member 28 is disposed on a respective oscillating lever 30, the latter being mobile as schematized by the arrows F3 in fig. 5. Consequently, each forming unit 26 comprises a pair of oscillating levers 30, each supporting a respective forming member 28 in a rotatable manner.

The forming members 28 belonging to the same pair can alternately assume a reciprocally distanced position, in which their axes of rotation X1 are reciprocally distanced by a first distance D1 (figs. 5 and 5a), and a reciprocally approached position, in which their axes of rotation X1 are distanced by a second distance D2 (figs. 5 and 5b), smaller than the first distance D1. To reach these positions, it is provided to move the oscillating levers 30 which move away from each other in order to take the forming members 28 into the reciprocally distanced position as above, and - on the contrary - move close to each other in order to take the forming members 28 into the reciprocally approached position as above.

Each forming unit 26 comprises, in the non-limiting example provided here, a pair of toothed elements 46, each attached to a respective oscillating lever 30 and configured in such a way that the toothed part extends only along a toothed sector.

The toothed elements 46 of the same pair interact with each other to determine the oscillation of the oscillating levers 30, so as to alternately move the two oscillating levers 30 of each forming unit 26 away from or close to each other.

Each toothed element 46 is pivoted in correspondence with a small wheel 47, which acts as a cam-follower and engages, possibly by means of the interposition of other mechanical components, with the cam profile 33, which is suitably shaped in such a way as to take the forming members 28 of the same pair into the reciprocally approached position at least in correspondence with the passage zone 45, in correspondence with which they interact with the fixed element 27.

Specifically, as can be better seen in the enlargement of fig. 5c, while the tubular elements 100 being worked pass through the passage zone 45, their external surface 103 is engaged both by the corrugations 40 of the rollers 28 and also by the corrugations 43 of the fixed element 27, while the forming spindles 13 are inserted into the same tubular elements 100, the forming spindles 13 being provided with the corrugated portion 14 which at the same time engages the internal surface 102 of the tubular elements 100.

Preferably, each small wheel 47 constitutes the rotation fulcrum of two adjacent toothed elements 46, belonging to two different consecutive forming units 26.

According to one variant of this second embodiment, not shown, each forming unit 26 comprises a single forming member 28, disposed on an oscillating lever 30 and rotatable, in an idle or commanded manner, about its own axis of rotation X1. Also in this variant, the forming unit 26 is alternately mobile between the conditions of engagement and disengagement described above. The relative disposition of the forming member 28 with respect to the tubular element 100 is such as to oppose its advance, since it is disposed for example to the right of the tubular element 100, considering as a reference the passage zone 45 of fig. 5, in which the forming units 26 rotate about the longitudinal axis X in the anticlockwise sense of rotation S.

The functioning of the apparatus 10, 10' is now described, which corresponds to the method to make at least one flexible shaped portion 105 on the tubular elements 100 in order to obtain straws 101, preferably made of paper or similar materials.

The apparatus 10, 10' begins to receive the tubular elements 100 in correspondence with the initial angular position of supply A1, in which the rotating member 11' (fig. 1) supplies the tubular elements 100, one at a time, to the apparatus 10, 10'. Here, the tubular elements 100 are received by the gripping members which are rotating together with the rotating member 11 in the sense of rotation S (figs. 1-3). It should be noted that in this initial angular position of supply A1, the gripping members are, one after the other, in their open condition, ready to accommodate a respective tubular element 100, so as to then move into the closed condition in which they grip the same tubular element 100, after the latter has been received by the respective gripping member.

In this initial angular position of supply A1, the forming spindles 13 (fig. 1) are in their second operating position, that is, completely retracted in such a way as to be disposed outside the respective tubular element 100.

Continuing the rotation of the rotating member 11, the tubular elements 100 arrive in an angular position of start of deformation A2 (figs. 1 and 3), in correspondence with which the tubular elements 100 enter the passage zone 45. In this angular position of start of deformation A2 the corresponding forming spindles 13 (fig. 1) have moved into their first operating position and have therefore entered inside the respective tubular elements 100, being coaxial thereto.

In the angular position of start of deformation A2, the forming units 26 move from a configuration of disengagement, in which the external forming means 25 are not in contact with the tubular elements 100, to a configuration of engagement with the tubular elements, in which the external forming means 25 and the internal forming means 15 locally deform the tubular elements 100 in order to produce the flexible shaped portion 105.

In the first embodiment of the apparatus 10, the passage from the configuration of disengagement to the configuration of engagement provides that the forming units 26 move from a radially retracted position R1, in which the rollers 28 are distanced from the tubular elements 100 retained by the gripping members, to a radially extended position R2 (figs. 2, 3 and 3a) in which the rollers 28 contact the tubular elements 100 in such a way that the latter interact with the corrugations 40 made on their peripheral surface 39.

In the second embodiment of the apparatus 10', the passage from the configuration of disengagement to the configuration of engagement provides that the rollers 28 of a same forming unit 26 move from the reciprocally distanced position to the reciprocally approached position which have been previously described.

It should be noted that in the configuration of engagement, each tubular element 100 is interposed between the two rollers 28 of the same forming unit 26 on one side and the fixed element 27 on the other, with a forming spindle 13 inserted inside it, in a position suitable to carry out the forming step. Therefore, while they pass through the passage zone 45, the tubular elements 100 interact both with the corrugations 43 with which the fixed element 27 is provided, and also with the corrugations 40 with which the rollers 28 are provided, as better visible in the figs. 2, 3, and 3a. The ridges 40a and 43a and the grooves 40b and 43b of the corrugations 40 and 43 then interact with the ridges 14a and the grooves 14b of the corrugated portion 14 of the forming spindle 13, in order to form the ridges 105a and the grooves 105b of the flexible shaped portion 105.

Subsequently, after another rotation corresponding to the angle β (figs. 1 and 3), the tubular elements 100 reach an angular position of end of deformation A3, in correspondence with which the tubular elements 100 exit from the passage zone 45. In the angular position of end of deformation A3, the forming units 26 perform a movement opposite to that described above, moving from the configuration of engagement to the configuration of disengagement, so that the rollers 28 cease to interact with the tubular elements 100.

This sequence of movements of the forming units 26 is determined by the cam profile 33, which is shaped in such a way as to determine, in the path segment between the angular position of start of deformation A2 and the angular position of end of deformation A3, in a first form embodiment, the radial lowering of the forming units 26 and, in a second embodiment, the reciprocal approach of the oscillating levers 30 of the same forming unit 26.

It should be noted that while they pass through the passage zone 45, the tubular elements 100 are made to roll about their own longitudinal axis Z, together with the forming spindle 13 inserted inside them and with the pair of rollers 28. It should be noted that the rolling of each tubular element 100 about its own longitudinal axis Z allows to accentuate the deformation action that the internal and external forming means exert on the same tubular elements 100.

When the tubular elements 100 reach the angular position of end of deformation A3 (fig. 1), the flexible shaped portion 105 of the tubular elements 100 (fig. 2) has been made. From this angular position of end of deformation A3, the forming spindles 13 gradually begin to retract in order to return from their first operating position to their second operating position, as shown in fig. 4, in which the forming spindle 13 is retracting so as to then completely exit from the respective tubular element 100.

Subsequently, continuing the rotation of the rotating member 11 (figs. 1 and 5), the gripping members reach an angular position of delivery A4, in which they move into their open position and allow the delivery of the tubular elements 100, on which the operation of forming the flexible shaped portion 105 has been completed, one after the other, to the rotating member 11" disposed immediately downstream of the apparatus 10, with reference to the path of advance A of the tubular elements 100. In possible variants, between the angular position of end of deformation A3 and the angular position of delivery A4, once the forming is completed, other workings can be performed on the tubular elements 100, for example compression of the flexible shaped portion 105, cutting of one of the end portions 106, 108, or bending of one of such ends onto the other end. In other embodiments, these operations, or others still, can also be performed in work stations disposed on the rotating member 11'.

Continuing the rotation of the rotating member 11, the gripping members once again reach the initial angular position of supply A1, in which they receive another tubular element 100 and are ready to repeat the work cycle previously described.

It is evident that at the end of the work cycle, due to the deformation applied on the tubular elements 100 which has allowed to make the flexible shaped portion 105, each of the tubular elements 100 has a length L shorter than its initial length. Similarly, this deformation can determine a localized increase in the nominal external diameter of the straws, in particular in correspondence with the flexible shaped portion 105, the ridges 105a of which can have a maximum extension, in the radial direction, corresponding to a diameter greater than the nominal diameter as above.

It is clear that modifications and/or additions of parts or steps may be made to the apparatus and/or to the method as described heretofore, without departing from the field and scope of the present invention.

It is also clear that, although the present invention has been described with reference to some specific examples, a person of skill in the art shall certainly be able to achieve many other equivalent forms of apparatuses and methods, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Apparatus (10) for making at least one flexible shaped portion (105) on tubular elements (100), which is defined by a succession of annular ridges (105a) and grooves (105b) and thus obtaining at least one straw (101) preferably made of paper, comprising external forming means (25) and internal forming means (15) which in cooperation with each other locally deform each of said tubular elements (100) by acting respectively on an external surface (103) and on an internal surface (102) thereof, wherein said external forming means (25) comprise a plurality of forming units (26) configured to be moved between a configuration of engagement with said tubular elements (100), in which said external forming means (25) and internal forming means (15) locally deform said tubular elements (100) to make said flexible shaped portion (105), and a configuration of disengagement in which at least said external forming means (25) do not contact said tubular elements (100), wherein said forming units (26) are configured to be moved alternately, in a selective manner, between said configuration of engagement and said configuration of disengagement, and each of said forming units (26) comprises at least one forming member (28) rotatable about an axis of rotation (X1) of its own.

2. Apparatus (10) as in claim 1, wherein said plurality of forming units (26) is attached to a rotating member (11), rotatable about a longitudinal axis (X) so that said axes of rotation (X1) are maintained parallel to said longitudinal axis (X).

3. Apparatus (10) as in claims 1 or 2, wherein each forming unit (26) comprises a pair of forming members (28) configured as rollers and the axes of rotation (X1) of two forming members (28) belonging to the same forming unit (26) are reciprocally parallel and distanced by a fixed distance (D), which is such as to allow the interposition of one of said tubular elements (100) between said pair of forming members (28).

4. Apparatus (10) as in any claim hereinbefore, wherein each forming unit (26) is mobile in a bidirectional manner, according to rectilinear and alternating displacements, parallel to a radial direction with respect to said longitudinal axis (X), between a radially retracted position (R1) in which said forming unit (26) is in said configuration of disengagement, and a radially extended position (R2) in which said forming unit (26) is in said configuration of engagement.

5. Apparatus (10) as in claims 1 or 2, wherein each forming unit (26) comprises a pair of forming members (28), in particular configured as rollers, each one disposed on a respective oscillating lever (30) so that the forming members (28) of said pair can alternately assume a reciprocally distanced position, in which said axes of rotation (X1) are distanced by a first distance (D1) and said forming unit (26) is in said configuration of disengagement, and a reciprocally approached position, in which said axes of rotation (X1) are distanced by a second distance (D2) smaller than said first distance (D1) and said forming unit (26) is in said configuration of engagement.

6. Apparatus (10) as in any claim hereinbefore, wherein each forming unit (26) comprises a cam-follower (34) which engages with a cam profile (33) shaped so as to allow said cam-follower (34) to selectively command said forming units (26) to alternately assume said configuration of engagement and said configuration of disengagement.

7. Apparatus (10) as in any claim hereinbefore, wherein said internal forming means (15) are configured as a plurality of forming spindles (13) configured to be first selectively inserted inside said tubular elements (100) during the forming of said flexible shaped portion (105), and then selectively extracted from said tubular elements (100) once the forming is completed, and each of said forming spindles (13) comprises internal forming members (14) configured to deform said internal surface (102), so as to make said flexible shaped portion (105) in cooperation with said external forming means (25).

8. Apparatus (10) as in claim 7, wherein said internal forming members (14) are shaped as a corrugated portion, having a profile formed by a succession of annular ridges (14a) and grooves (14b), and said external forming means (25) comprise at least a plurality of corrugations (40, 43) which define a succession of ridges (40a, 43a) and grooves (40b, 43b), the shape of which is correlated to, preferably mating with, more preferably in an offset manner, the shape of the profile of said internal forming members (14), so that said ridges (40a, 43a) are aligned with said grooves (14b) when said forming spindles (13) are inserted inside said tubular elements (100).

9. Apparatus (10) as in claim 8, wherein said at least one plurality of corrugations (40, 43) comprises a first plurality of corrugations (40) made on a peripheral surface (39) of each of said forming members (28), and a second plurality of corrugations (43) present on a fixed member (27), and said first and second plurality of corrugations (40, 43) are opposite each other with a passage zone (45) in the middle to selectively receive said tubular elements (100) with said internal forming means (15) inside.

10. Apparatus (10) as in claim 9, wherein said forming units (26) are disposed angularly, equally distanced from each other in the proximity of a peripheral edge of a rotating member (11) to which said plurality of forming units (26) is attached, so that said first plurality of corrugations (40) is disposed in the proximity of said passage zone (45) so that said tubular elements (100), passing through said passage zone (45), can interact with said first and second plurality of corrugations (40, 43).

11. Apparatus (10) as in claims 9 or 10, wherein said fixed member (27) has a convex shaped surface (42) facing toward said plurality of forming units (26), and said fixed member (27) is conformed in such a way that said second plurality of corrugations (43) extends for an arc of circumference having a determinate angle at the center (β).

12. Apparatus (10) as in any claim from 7 to 11, wherein each forming spindle (13) is constrained to a command member (19) sliding parallel to a longitudinal axis (X), with reciprocated motion between a first operating position, in which said forming spindle (13) is completely inserted inside a respective tubular element (100), and a second operating position, in which said forming spindle (13) is completely extracted from said respective tubular element (100), and vice versa, and said reciprocated motion of said command member (19) is obtained thanks to a cam profile (20) with which there is engaged a corresponding cam-follower (21) associated with said command member (19).

13. Method to make at least one flexible shaped portion (105) on tubular elements (100), which is defined by a succession of annular ridges (105a) and grooves (105b), so as to obtain from each of said tubular elements (100) at least one straw (101), preferably made of paper; the method comprises a forming step, during which it is provided to selectively insert, inside each of said tubular elements (100), internal forming means (15), which are configured to locally deform each of said tubular elements (100) in order to make said flexible shaped portion (105), acting on an internal surface (102) thereof, in association with external forming means (25) comprising a plurality of forming units (26), which act on a corresponding external surface (103) of said tubular elements (100), and it also provides moving said forming units (26) between a configuration of engagement with said tubular elements (100), in which said forming step occurs and each of said tubular elements (100) is engaged by a respective forming unit (26), and a configuration of disengagement, in which said external forming means (25) are not in contact with said tubular elements (100), wherein said forming step is carried out by means of at least one forming member (28) comprised in each forming unit (26) and rotating about an axis of rotation (X1) of its own, and said moving said forming unit (26) is carried out alternately, in a selective manner.

14. Method as in claim 13, wherein in said forming step said internal forming means (15) are maintained selectively inserted inside said tubular elements (100) during the forming of said flexible shaped portion (105), so as to then be selectively extracted once the forming is completed.

15. Method as in claim 14, wherein said forming step is carried out while said tubular elements (100) pass through a passage zone (45), defined by a first plurality of corrugations (40) present on each of said forming members (28) and by a second plurality of corrugations (43) present on a fixed member (27) which is also comprised in said external forming means (25).

## Patentansprüche

1. Vorrichtung (10) zur Herstellung mindestens eines flexiblen, geformten Abschnitts (105) auf röhrenförmigen Elementen (100), der durch eine Folge von ringförmigen Rippen (105a) und Rillen (105b) definiert ist, um so mindestens einen Strohhalm (101), vorzugsweise aus Papier, zu erhalten, umfassend äußere Formgebungsmittel (25) und innere Formgebungsmittel (15), die im Zusammenwirken miteinander jedes der röhrenförmigen Elemente (100) lokal verformen, indem sie auf eine Außenfläche (103) bzw. auf eine Innenfläche (102) davon einwirken, wobei die äußeren Formgebungsmittel (25) eine Vielzahl von Formgebungseinheiten (26) umfassen, die so konfiguriert sind, dass sie zwischen einer Konfiguration des Eingriffs mit den röhrenförmigen Elementen (100) bewegt werden können, in der die äußeren Formgebungsmittel (25) und die inneren Formgebungsmittel (15) die röhrenförmigen Elemente (100) lokal verformen, um den flexiblen geformten Abschnitt (105) zu bilden, und einer Konfiguration des Lösens, in der zumindest die äußeren Formgebungsmittel (25) die röhrenförmigen Elemente (100) nicht berühren, bewegt werden können, wobei die Formgebungseinheiten (26) so konfiguriert sind, dass sie abwechselnd in einer selektiven Weise zwischen der Konfiguration des Eingriffs und der Konfiguration des Lösens bewegt werden, und jede der Formgebungseinheiten (26) zumindest ein Formgebungselement (28) umfasst, das um eine eigene Drehachse (X1) drehbar ist.

2. Vorrichtung (10) nach Anspruch 1, wobei die Vielzahl von Formgebungseinheiten (26) an einem Drehelement (11) befestigt ist, das um eine Drehachse (X) drehbar ist, so dass die Drehachsen (X1) parallel zu der Längsachse (X) gehalten werden.

3. Vorrichtung (10) nach Anspruch 1 oder 2, wobei jede Formgebungseinheit (26) ein Paar als Rollen ausgebildete Formgebungselemente (28) umfasst und die Drehachsen (X1) zweier zum selben Formgebungseinheit (26) gehörender Formgebungselement (28) wechselseitig parallel sind und in einem festen Abstand (D) beabstandet sind, der derart ausgebildet ist, dass er das Einfügen eines der röhrenförmigen Elemente (100) zwischen das Paar von Formgebungselementen (28) ermöglicht.

4. Vorrichtung (10) nach einem der vorhergehenden Ansprüche, bei der jede Formgebungseinheit (26) in zwei Richtungen gemäß geradlinigen und abwechselnden Verschiebungen parallel zu einer radialen Richtung in Bezug auf die Längsachse (X) zwischen einer radial zurückgezogenen Position (R1), in der sich die Formgebungseinheit (26) in der Konfiguration des Lösens befindet, und einer radial ausgefahrenen Position (R2), in der sich die Formgebungseinheit (26) in der Konfiguration des Eingriffs befindet, ist.

5. Vorrichtung (10) nach Anspruch 1 oder 2, wobei jede Formgebungseinheit (26) ein Paar von Formgebungselementen (28), insbesondere in Form von Rollen, umfasst, die jeweils an einem entsprechenden Schwinghebel (30) angeordnet sind, so dass die Formgebungselemente (28) des Paares abwechselnd eine wechselseitig beabstandete Position einnehmen können, in der die Drehachsen (X1) um einen ersten Abstand (D1) beabstandet sind und die Formgebungseinheit (26) sich in der Konfiguration des Lösens befindet, und eine wechselseitig angenäherte Position einnehmen können, in der die Drehachsen (X1) um einen zweiten Abstand (D2) beabstandet sind, der kleiner ist als der erste Abstand (D1), und die Formgebungseinheit (26) sich in der Konfiguration des Eingriffs befindet.

6. Vorrichtung (10) nach einem der vorhergehenden Ansprüche, wobei jede Formgebungseinheit (26) einen Nockenstößel (34) umfasst, der in ein Nockenprofil (33) eingreift, das so geformt ist, dass der Nockenstößel (34) die Formgebungseinheiten (26) selektiv anweisen kann, abwechselnd die Konfiguration des Eingriffs und die Konfiguration des Lösens anzunehmen.

7. Vorrichtung (10) nach einem der vorhergehenden Ansprüche, wobei die inneren Formgebungsmittel (15) als eine Vielzahl von Formgebungsspindeln (13) ausgebildet sind, die so konfiguriert sind, dass sie zunächst selektiv in die röhrenförmigen Elemente (100) während des Formens des flexiblen geformten Abschnitts (105) eingeführt und dann selektiv aus den röhrenförmigen Elementen (100) herausgezogen werden, sobald das Formen abgeschlossen ist, und jede der Formgebungsspindeln (13) innere Formgebungselemente (14) umfasst, die so konfiguriert sind, dass sie die Innenfläche (102) verformen, um den flexiblen geformten Abschnitt (105) in Zusammenarbeit mit den äußeren Formgebungsmitteln (25) herzustellen.

8. Vorrichtung (10) nach Anspruch 7, wobei die inneren Formgebungselemente (14) als geriffelter Abschnitt geformt sind, der ein Profil aufweist, das durch eine Aufeinanderfolge von ringförmigen Rippen (14a) und Rillen (14b) gebildet ist, und die äußeren Formgebungsmittel (25) mindestens eine Vielzahl von Riffelungen (40, 43) umfassen, die eine Aufeinanderfolge von Rippen (40a, 43a) und Rillen (40b, 43b) definieren, deren Form mit der Form des Profils der inneren Formgebungselemente (14) korreliert, vorzugsweise mit ihr übereinstimmt, mehr bevorzugt in einer versetzten Weise, so dass die Rippen (40a, 43a) mit den Rillen (14b) ausgerichtet sind, wenn die Formgebungsspindeln (13) in die röhrenförmigen Elemente (100) eingesetzt werden.

9. Vorrichtung (10) nach Anspruch 8, wobei die mindestens eine Vielzahl von Riffelungen (40, 43) eine erste Vielzahl von Riffelungen (40), die auf einer Umfangsfläche (39) jedes der Formgebungselemente (28) ausgebildet sind, und eine zweite Vielzahl von Riffelungen (43), die auf einem feststehenden Element (27) vorhanden sind, umfasst, und die erste und zweite Vielzahl von Riffelungen (40, 43) einander gegenüberliegen, wobei sich in der Mitte eine Durchgangszone (45) befindet, um die röhrenförmigen Elemente (100) mit den inneren Formgebungsmitteln (15) selektiv aufzunehmen.

10. Vorrichtung (10) nach Anspruch 9, wobei die Formgebungseinheiten (26) abgewinkelt und gleichmäßig voneinander beabstandet in der Nähe einer Umfangskante eines Drehelements (11) angeordnet sind, an dem die Vielzahl von Formgebungseinheiten (26) befestigt ist, so dass die erste Vielzahl von Riffelungen (40) in der Nähe der Durchgangszone (45) angeordnet ist, so dass die röhrenförmigen Elemente (100), die die Durchgangszone (45) passieren, mit der ersten und zweiten Vielzahl von Riffelung (40, 43) zusammenwirken können.

11. Vorrichtung (10) nach Anspruch 9 oder 10, wobei das feststehende Element (27) eine konvex geformte Oberfläche (42) aufweist, die der Vielzahl von Formgebungseinheiten (26) zugewandt ist, und das feststehende Element (27) so geformt ist, dass sich die zweite Vielzahl von Riffelungen (43) über einen Umfangsbogen erstreckt, der in der Mitte einen bestimmten Winkel (β) aufweist.

12. Vorrichtung (10) nach einem der Ansprüche 7 bis 11, wobei jede Formgebungsspindel (13) an einem Führungselement (19) befestigt ist, das parallel zu einer Längsachse (X) gleitet, mit einer Hin- und Herbewegung zwischen einer ersten Betriebsposition, in der die Formgebungsspindel (13) vollständig in ein entsprechendes röhrenförmiges Element (100) eingeführt ist, und einer zweiten Betriebsposition, in der die Formgebungsspindel (13) vollständig aus dem jeweiligen röhrenförmigen Element (100) herausgezogen ist, und umgekehrt, und wobei die Hin- und Herbewegung des Führungselements (19) durch das Nockenprofil (20) erzielt wird, mit dem ein entsprechender Nockenstößel (21) in Eingriff steht, der dem Führungselement (19) zugeordnet ist.

13. Verfahren zur Herstellung von mindestens einem flexiblen, geformten Abschnitt (105) auf röhrenförmigen Elementen (100), der durch eine Folge von ringförmigen Rippen (105a) und Rillen (105b) definiert ist, um aus jedem der röhrenförmigen Elemente (100) mindestens einen Strohhalm (101), vorzugsweise aus Papier, zu erhalten, wobei das Verfahren einen Formgebungsschritt umfasst, bei dem vorgesehen ist, selektiv in jedes der röhrenförmigen Elemente (100) innere Formgebungsmittel (15) einzuführen, die so konfiguriert sind, dass sie jedes der röhrenförmigen Elemente (100) lokal verformen, um den flexiblen geformten Abschnitt (105) herzustellen, der auf eine Innenfläche (102) davon einwirkt, in Verbindung mit äußeren Formgebungsmitteln (25), die eine Vielzahl von Formgebungseinheiten (26) umfassen, die auf eine entsprechende Außenfläche (103) der röhrenförmigen Elemente (100) einwirken, und die auch das Bewegen der Formgebungseinheiten (26) zwischen einer Eingriffskonfiguration mit den röhrenförmigen Elementen (100) ermöglichen, in der der Formgebungsschritt stattfindet und jedes der röhrenförmigen Elemente (100) von einer entsprechenden Formgebungseinheit (26) in Eingriff genommen wird, und einer Konfiguration des Lösens, in der die äußeren Formgebungsmittel (25) nicht in Kontakt mit den röhrenförmigen Elementen (100) sind, wobei der Formgebungsschritt mittels mindestens eines Formgebungselements (28) ausgeführt wird, das in jeder Formgebungseinheit (26) enthalten ist und sich um eine eigene Drehachse (X1) dreht, und das Bewegen der Formgebungseinheit (26) abwechselnd auf eine selektive Weise ausgeführt wird.

14. Verfahren nach Anspruch 13, wobei in dem Formgebungsschritt die inneren Formgebungsmittel (15) selektiv im Inneren der röhrenförmigen Elemente (100) während des Formens des flexiblen geformten Abschnitts (105) eingesetzt gehalten werden, um dann selektiv herausgezogen zu werden, sobald die Formung abgeschlossen ist.

15. Verfahren nach Anspruch 14, wobei der Formungsschritt ausgeführt wird, während die röhrenförmigen Elemente (100) eine Durchgangszone (45) durchlaufen, die durch eine erste Vielzahl von Riffelungen (40), die auf jedem der Formgebungselemente (28) vorhanden sind, und durch eine zweite Vielzahl von Riffelungen (43) definiert sind, die auf einem feststehenden Element (27) vorhanden sind, das ebenfalls in den äußeren Formgebungsmitteln (25) enthalten ist.

## Revendications

1. Appareil (10) pour réaliser au moins une portion (105) conformée pour être flexible sur des éléments tubulaires (100), qui est définie par une succession de nervures annulaires (105a) et de gorges (105b) et ainsi obtenir au moins une paille (101) de préférence en papier, comprenant des moyens de formage externes (25) et des moyens de formage internes (15) qui en coopération les uns avec les autres déforment localement chacun desdits éléments tubulaires (100) en agissant respectivement sur une surface externe (103) et sur une surface interne (102) de celui-ci, lesdits moyens de formage externes (25) comprenant une pluralité d'unités de formage (26) configurées pour être mobiles entre une configuration d'engagement avec lesdits éléments tubulaires (100), dans laquelle lesdits moyens de formage externes (25) et moyens de formage internes (15) déforment localement lesdits éléments tubulaires (100) pour rendre ladite portion (105) conformée pour être flexible, et une configuration de dégagement dans laquelle au moins lesdits moyens de formage externes (25) ne sont pas en contact avec lesdits éléments tubulaires (100), lesdites unités de formage (26) étant configurées pour être déplacées alternativement, de manière sélective, entre ladite configuration d'engagement et ladite configuration de désengagement, et chacune desdites unités de formage (26) comprend au moins un élément de formage (28) apte à tourner autour d'un axe de rotation (X1) qui lui est propre.

2. Appareil (10) selon la revendication 1, dans lequel ladite pluralité d'unités de formage (26) est fixée à un élément rotatif (11), apte à tourner autour d'un axe longitudinal (X) de sorte que lesdits axes de rotation (X1) sont maintenus parallèles audit axe longitudinal (X).

3. Appareil (10) selon les revendications 1 ou 2, dans lequel chaque unité de formage (26) comprend une paire d'éléments de formage (28) sous la forme de rouleaux et les axes de rotation (X1) de deux éléments de formage (28) appartenant à la même unité de formage (26) sont réciproquement parallèles et distants d'une distance fixe (D), qui est telle qu'elle permet l'interposition d'un desdits éléments tubulaires (100) entre ladite paire d'éléments de formage (28).

4. Appareil (10) selon l'une quelconque des revendications précédentes, dans lequel chaque unité de formage (26) est mobile de manière bidirectionnelle, selon des déplacements rectilignes et alternatifs, parallèles à une direction radiale par rapport audit axe longitudinal (X), entre une position radialement rétractée (R1) dans laquelle ladite unité de formage (26) est dans ladite configuration de dégagement, et une position radialement étendue (R2) dans laquelle ladite unité de formage (26) est dans ladite configuration d'engagement.

5. Appareil (10) selon les revendications 1 ou 2, dans lequel chaque unité de formage (26) comprend une paire d'éléments de formage (28), en particulier sous la forme de rouleaux, chacun disposé sur un levier oscillant respectif (30) de sorte que les éléments de formage (28) de ladite paire sont aptes à prendre alternativement une position mutuellement espacée, dans laquelle lesdits axes de rotation (X1) sont distants d'une première distance (D1) et ladite unité de formage (26) est dans ladite configuration de dégagement, et une position réciproquement de rapprochement, dans laquelle lesdits axes de rotation (X1) sont distants d'une deuxième distance (D2) inférieure à ladite première distance (D1) et ladite unité de formage (26) est dans ladite configuration d'engagement.

6. Appareil (10) selon l'une quelconque des revendications précédentes, dans lequel chaque unité de formage (26) comprend un suiveur de came (34) qui est en engagement avec un profil de came (33) formé de manière à permettre audit suiveur de came (34) de commander sélectivement lesdites unités de formage (26) pour adopter alternativement ladite configuration d'engagement et ladite configuration de désengagement.

7. Appareil (10) selon l'une quelconque des revendications précédentes, dans lequel lesdits moyens de formage internes (15) sont configurés sous forme d'une pluralité de broches de formage (13) configurées pour être d'abord insérées sélectivement à l'intérieur desdits éléments tubulaires (100) pendant le formage de ladite portion (105) conformée pour être flexible, puis sélectivement extraites desdits éléments tubulaires (100) une fois le formage terminé, et chacune desdites broches de formage (13) comprend des éléments de formage internes (14) configurés pour déformer ladite surface interne (102), de manière à fabriquer ladite portion (105) conformée pour être flexible en coopération avec lesdits moyens de formage externes (25).

8. Appareil (10) selon la revendication 7, dans lequel lesdits éléments de formage internes (14) sont conformés en une partie ondulée, ayant un profil formé par une succession de nervures annulaires (14a) et de gorges (14b), et lesdits moyens de formage externes (25) comprennent au moins une pluralité d'ondulations (40, 43) qui définissent une succession de nervures (40a, 43a) et de gorges (40b, 43b), dont la forme est corrélé à, de préférence coopérant avec, de façon encore préférée de manière décalée, la forme du profil desdits éléments de formage internes (14), de sorte que lesdites nervures (40a, 43a) sont alignées avec lesdites gorges (14b) lorsque lesdites broches de formage (13) sont insérées à l'intérieur desdits éléments tubulaires (100).

9. Appareil (10) selon la revendication 8, dans lequel ladite au moins une pluralité d'ondulations (40, 43) comprend une première pluralité d'ondulations (40) réalisées sur une surface périphérique (39) de chacun desdits éléments de formage (28), et une deuxième pluralité d'ondulations (43) présente sur un élément fixe (27), et lesdites première et deuxième pluralité d'ondulations (40, 43) sont opposées l'une à l'autre avec une zone de passage (45) au milieu pour recevoir sélectivement lesdits éléments tubulaires (100) avec lesdits moyens de formage internes (15) à l'intérieur.

10. Appareil (10) selon la revendication 9, dans lequel lesdites unités de formage (26) sont disposées angulairement, à égale distance l'une de l'autre à proximité d'un bord périphérique d'un élément rotatif (11) auquel ladite pluralité d'unités de formage (26) est fixée, de sorte que ladite première pluralité d'ondulations (40) est disposée à proximité de ladite zone de passage (45) de sorte que lesdits éléments tubulaires (100), traversant ladite zone de passage (45), sont aptes à interagir avec lesdites première et deuxième pluralités d'ondulations (40, 43).

11. Appareil (10) selon les revendications 9 ou 10, dans lequel ledit élément fixe (27) a une surface de forme convexe (42) tournée vers ladite pluralité d'unités de formage (26), et ledit élément fixe (27) est conformé de telle manière que ladite deuxième pluralité d'ondulations (43) s'étend sur un arc de circonférence ayant un angle déterminé au centre (β).

12. Appareil (10) selon l'une quelconque des revendications 7 à 11, dans lequel chaque broche de formage (13) est contrainte à un organe de commande (19) coulissant parallèlement à un axe longitudinal (X), avec un mouvement alternatif entre une première position de fonctionnement, dans laquelle ladite broche de formage (13) est complètement insérée à l'intérieur d'un élément tubulaire respectif (100), et une deuxième position de fonctionnement, dans laquelle ladite broche de formage (13) est complètement extraite dudit élément tubulaire respectif (100), et vice versa, et ledit mouvement de va-et-vient dudit organe de commande (19) est obtenu grâce à un profil de came (20) avec lequel un suiveur de came correspondant (21) associé audit organe de commande (19) est en engagement.

13. Procédé pour réaliser au moins une portion profilée flexible (105) sur des éléments tubulaires (100), qui est définie par une succession de nervures annulaires (105a) et de gorges (105b), de manière à obtenir à partir de chacun desdits éléments tubulaires (100) au moins une paille (101), de préférence en papier ; le procédé comprend une étape de formage, au cours de laquelle il est prévu d'insérer sélectivement, à l'intérieur de chacun desdits éléments tubulaires (100), des moyens de formage internes (15), qui sont configurés pour déformer localement chacun desdits éléments tubulaires (100) afin de réaliser ladite portion (105) conformée pour être flexible, en agissant sur une surface interne (102) de celle-ci, en association avec des moyens de formage externe (25) comprenant une pluralité d'unités de formage (26), qui agissent sur une surface externe correspondante (103) desdits éléments tubulaires (100), et il est également prévu de déplacer lesdites unités de formage (26) entre une configuration d'engagement avec lesdits éléments tubulaires (100), dans laquelle ladite étape de formage se produit et chacun desdits éléments tubulaires (100) fait l'objet d'un engagement par une unité de formage respective (26), et une configuration de désengagement, dans laquelle lesdits moyens de formage externes (25) ne sont pas en contact avec lesdits éléments tubulaires (100), ledit procédé étant tel que ladite étape de formage est mise en oeuvre au moyen d'au moins un élément de formage (28) compris dans chaque unité de formage (26) et tournant autour d'un axe de rotation (X1) qui lui est propre, et ledit déplacement de ladite unité de formage (26) est effectué alternativement, de manière sélective.

14. Procédé selon la revendication 13, dans lequel lors de ladite étape de formage, lesdits moyens de formage internes (15) sont maintenus sélectivement insérés à l'intérieur desdits éléments tubulaires (100) lors du formage de ladite portion profilée flexible (105), afin d'être ensuite extraits sélectivement une fois le formage terminé.

15. Procédé selon la revendication 14, dans lequel ladite étape de formage est réalisée pendant que lesdits éléments tubulaires (100) traversent une zone de passage (45), définie par une première pluralité d'ondulations (40) présentes sur chacun desdits éléments de formage (28) et par une deuxième pluralité d'ondulations (43) présentes sur un élément fixe (27) qui est également compris dans lesdits moyens de formage externes (25).
